(19) Europäisches Patentamt
European Patent Office
Office européen des brevets

(11) **EP 3 835 110 B1**

(12) **EUROPEAN PATENT SPECIFICATION**

(45) Date of publication and mention
of the grant of the patent:
**06.11.2024 Bulletin 2024/45**

(51) International Patent Classification (IPC):
***B60L 13/04*** (2006.01)   ***B61B 13/08*** (2006.01)
***B60L 13/03*** (2006.01)   ***B60L 13/06*** (2006.01)
***B60L 13/08*** (2006.01)

(21) Application number: **19846842.3**

(22) Date of filing: **01.07.2019**

(52) Cooperative Patent Classification (CPC):
**B61B 13/08; B60L 13/003; B60L 13/03;
B60L 13/04; B60L 13/06; B60L 13/08;**
B60L 2200/26; Y02T 30/00

(86) International application number:
**PCT/CN2019/094131**

(87) International publication number:
**WO 2020/029715 (13.02.2020 Gazette 2020/07)**

(54) **SUSPENDED RAIL TRANSPORT DEVICE AND MAGNETIC-ELECTRIC HYBRID SUSPENSION RAIL SYSTEM THEREOF**

SCHWEBEBAHNTRANSPORTVORRICHTUNG UND MAGNETISCH-ELEKTRISCHES HYBRID-SCHWEBEBAHNSYSTEM DAFÜR

DISPOSITIF DE TRANSPORT A RAIL SUSPENDU ET SYSTÈME DE RAIL DE SUSPENSION HYBRIDE MAGNÉTIQUE-ÉLECTRIQUE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2018 CN 201810884767**

(43) Date of publication of application:
**16.06.2021 Bulletin 2021/24**

(73) Proprietor: **Jiangxi University of Science and
Technology
Ganzhou, Jiangxi 341000 (CN)**

(72) Inventors:
• **YANG, Bin
Ganzhou, Jiangxi 341000 (CN)**
• **YANG, Jie
Ganzhou, Jiangxi 341000 (CN)**
• **ZHANG, Zhenli
Ganzhou, Jiangxi 341000 (CN)**
• **HU, Hailin
Ganzhou, Jiangxi 341000 (CN)**
• **DENG, Yongfang
Ganzhou, Jiangxi 341000 (CN)**
• **SHI, Heng
Ganzhou, Jiangxi 341000 (CN)**

(74) Representative: **Dragotti & Associati S.R.L.
Via Nino Bixio, 7
20129 Milano (IT)**

(56) References cited:
CN-A- 1 470 417     CN-A- 1 833 907
CN-A- 1 958 365     CN-A- 107 791 882
CN-A- 109 094 422    CN-C- 1 111 123
JP-A- H11 122 716    JP-A- S6 392 205
US-A- 4 838 172      US-A- 5 467 718
US-A1- 2006 219 128   US-A1- 2007 095 245
US-A1- 2010 126 373

**Description**

**Field of the Invention**

The present invention relates to the field of rail transit, in particular to a magneto-electric hybrid suspension rail system

**Background of the Invention**

Rail transit has gradually attracted widespread attention due to its relatively independent lines, convenient dispatching, considerable carrying capacity and other advantages. Rail transit equipment driven by a magnetic suspension technology is generally considered to be the development trend of transportation in the 21st century because of its advantages of high speed, high climbing ability, small turning radius, economic and environmental protection, etc.

At present, the magnetic suspension rail transit equipment with relatively mature technology is divided, according to the principle of electromagnetic force, into the following two main drive modes: electromagnetic suspension drive and electrodynamics suspension drive. Electromagnetic suspension (EMS) adopts the attractive force between a normally conductive magnet and a strong conductive magnet to achieve suspension. The suspension height of an EMS train is generally 8-12 mm, and in the suspension mode, the suspension of the train is achieved by an electromagnetic attractive force generated by train electromagnets under the rail and the rail. However, the EMS train cannot achieve self-stabilizing suspension. Rail transit equipment driven by EMS needs to excite electromagnets with a larger excitation current to generate a magnetic field matched with the rail in order to achieve stable suspension of the train. Although most of the current magnetic suspension trains are EMS trains, such as German TR-type magnetic suspension trains and Japanese HSST-type magnetic suspension trains, the EMS trains consume more energy. In addition, since electromagnetic devices need to carry a large excitation current to maintain the stable suspension, and the excitation current generates much heat on electronic devices, it is difficult for rail transit equipment driven by EMS to maintain stable operation of various suspension sensors in the equipment for a long time.

Another magnetic suspension mode is electrodynamics suspension (EDS). The generation principle of a suspension force in the mode is that a changing electromagnetic field induces eddy currents in metal conductors, and an eddy current magnetic field is opposite to an excitation magnetic field of an original magnetic field to generate a repulsive force. The suspension clearance of EDS trains is larger and generally is 100-150 mm. However, the EDS trains cannot achieve static suspension, and the trains need to reach a certain operating speed before the trains can generate enough suspension force to enable the trains to suspend. Therefore, additional mechanical structures are usually required to avoid abrasion of the eddy current conductors due to contact with each other.

US20060219128A1 discloses a compensation type suspending-rail permanent magnetic levitation system, which includes a track unit and a vehicle unit, the track unit includes a suspending arch crosstie, and balancing guide levitation rails are symmetrically disposed on two inner sides of the suspending arch crosstie. Permanent magnetic rails are disposed on upper surfaces of ends at an open side of the suspending arch crosstie and auxiliary guide rails are disposed on end surface of the ends, respectively. The vehicle unit includes a compartment and a magnetic levitation cabin. Two balancing permanent magnets of opposite magnetic poles are disposed on both outer sides of the cabin respectively, and magnetically conductive bases are provided between the balancing permanent magnets and the cabin. Guide wheels are provided between the two balancing permanent magnets on one outer side of the cabin. Wing magnet bases are mounted to upper portions at the both outer sides of the cabin and wing magnets are mounted under the wing magnet bases respectively. Sliding shoes are provided at inner sides of the wing magnet bases respectively and auxiliary guide wheels are symmetrically provided between a lower portion of the cabin and the compartment.

US5467718A discloses A magnetic levitation transport system, which includes magnetic levitation vehicles each driven by a linear motor to run along a track. Induction lines extend through predetermined blocks of the running track to transmit a high frequency sine-wave current. Each vehicle includes electromagnets to attract levitating magnetic members extending along the running track, a pickup coil resonant with a frequency of the induction lines to generate an electromotive force, and a battery chargeable by the pickup coil. The electromagnets receive power from the pickup coil and/or the battery.

US20070095245A1 discloses a magnetic levitation guideway-train system. The levitation power chambers located at a lower portion of the train are fitted in the grooved guideway, and the side permanent magnets of the levitation power chambers and the ferromagnetic balance levitation tracks correspond to one another so as to generate upward or downward balance attractive force for the train. Wing permanent magnets at the bottom of the levitation power chamber and the permanent magnet tracks correspond to one another so that the identical poles of the wing permanent magnets and the permanent magnet tracks repel one another to provide the train with an upward repulsion levitation force.

Based on the above magnetic suspension technology, a suspended rail transit system is quietly approaching people's lives. Different from traditional trains running on rails, the rails of the suspended rail transit equipment are supported in the air by steel beams or concrete pouring columns, and a compartment of the suspended rail transit equipment is supported by the above rails and is suspended to run in the air. The suspended rail transit system is widely concerned due to the effects of being small in occupied area, conducive to improving the urban public transportation environment, and capable of bringing passengers a good spatial visual experience and a good riding experience.

However, since the EMS mode cannot achieve self stability, and the EDS mode cannot achieve static suspension, the current suspended rail trains need wheel-rail support to achieve suspension. However, the wheel-rail support causes severe mechanical abrasion during operation, high maintenance difficulty and noise due to wheel-rail friction during operation, which affects the riding experience.

Therefore, there is an urgent need for a magnetic suspension technology that can overcome the disadvantages of the above drive modes and can be applied to the suspended rail transit equipment.

## Summary of the Invention

The objective of the present invention is that the defects of the EMS mode and the EDS mode are overcome, and the EMS mode and the EDS mode are effectively combined to be applied to suspended rail transit equipment for solving the problems that with wheel rail support, mechanical abrasion is severe during operation, the maintenance difficulty is high, and noise is often caused by wheel-rail friction during operation, which affects the riding experience.

A suspended rail transit equipment includes: a support structure; a suspended overhead beam supported by the support structure in the air; a compartment; a bogie, a first end of the bogie arranged in the suspended overhead beam, and a second end of the bogie connected to the compartment; and a control unit for controlling the compartment to run along the suspended overhead beam; wherein an inner wall of the suspended overhead beam is provided with rails; on-board magneto-electric rails are arranged at positions, opposite to the rails, of the surface of the bogie; the on-board magneto-electric rails include at least two rows of on-board permanent magnet arrays arranged in a running direction of the compartment; the on-board permanent magnet arrays are further symmetrically provided with at least one pair of electromagnets in the running direction of the compartment; the on-board permanent magnet arrays are further provided with distance sensors; the electromagnets and the distance sensors are connected to the control unit respectively; the rails include at least one row of rail permanent magnet arrays, the rail permanent magnet arrays and the on-board permanent magnet arrays are interlaced at intervals, and magnetic poles of the rail permanent magnet arrays and magnetic poles of the on-board permanent magnet arrays repel each other; the distance sensors are used for detecting a gap between the on-board permanent magnet arrays and the rail permanent magnet arrays, or are used for detecting a gap between the on-board permanent magnet arrays and the inner wall of the suspended overhead beam, and the distance sensors output electrical signals to the control unit according to the size of the gap; and the control unit is further used for controlling the magnitude of an excitation current in the electromagnets according to the electrical signals of the distance sensors, and the excitation current excites an magnetic field to maintain no contact between the rail permanent magnet arrays and the on-board permanent magnet arrays.

Preferably, the rail permanent magnet arrays or the on-board permanent magnet arrays comprise at least two permanent magnet layers in a vertical direction, and an epoxy resin interlayer is arranged between two adjacent permanent magnet layers.

Preferably, at least one side of each electromagnet is provided with a rubber spring.

Preferably, at least two rails are arranged, and are parallel to each other; at least four sets of on-board magneto-electric rails are arranged; and the first end of the bogie comprises a beam and a frame, and the sets of on-board magneto-electric rails are connected to the frame through the beam.

Preferably, the control unit receives the electrical signals of the distance sensors in the sets of on-board magneto-electric rails, and obtains gaps $s_1$, $s_2$, ..., $s_n$ between the on-board permanent magnet arrays in the sets of on-board magneto-electric rails and the rail permanent magnet arrays according to the electrical signals, wherein $n$ represents the number of sets of the on-board magneto-electric rails;

the control unit controls the magnitude of the excitation current in the electromagnets according to the gaps $s_1$, $s_2$, ..., $s_n$;

wherein, excitation current in the electromagnets located on one side is $I_l \propto k_p (s_i - s_0) + k_i \int (s_i - s_0) dt + k_d \int (s_i - s_0)'' dt$, $l \in [1, n]$, wherein $s_i$ represents the gap corresponding to the on-board magneto-electric rail where the electromagnets are located;

excitation current in the electromagnets located on the other side is $I_m \propto k_p (\bar{s} - s_0) + k_i \int (\bar{s} - s_0) dt + k_d \int (\bar{s} - s_0)'' dt$,

$$\overline{s} = \frac{1}{N}\sum_{i=1}^{N}s_i, \quad N \le n$$

$m \in [1, n]$, wherein ;

the excitation current $I_m$ in the electromagnets on the other side and the excitation current $I_l$ in the electromagnets on one side respectively excite magnetic fields in opposite directions, and the magnetic fields in the opposite directions respectively generate mutually repulsive forces, so that the rail permanent magnet arrays do not contact with the on-board permanent magnet arrays;

wherein $k_p$ represents a proportional coefficient, $k_i$ represents a gap integral feedback coefficient, $k_d$ represents a differential coefficient, and $s_0$ represents a rated guiding gap; and

the proportional coefficient $k_p$, the gap integral feedback coefficient $k_i$, the differential coefficient $k_d$ and the rated guiding gap $s_0$ are preset in the control unit.

Preferably, an outer side of the bogie is further connected to guide wheels; and wheel rails are arranged at positions, opposite to the guide wheels, of the inner wall of the suspended overhead beam, and a gap is reserved between the guide wheels and the wheel rails.

In order to achieve the above objective, a magneto-electric hybrid suspension rail system is provided, which comprises a control unit, and further comprises: rails and on-board magneto-electric rails, which are arranged opposite to each other, the on-board magneto-electric rails comprise at least two rows of on-board permanent magnet arrays; each on-board permanent magnet array is provided with at least one electromagnet, and a magnetic pole of the electromagnet is perpendicular to a direction of the rails; the on-board permanent magnet arrays are further provided with distance sensors; the electromagnet and the distance sensors are connected to the control unit; the rails comprise at least one row of rail permanent magnet arrays, the rail permanent magnet arrays and the on-board permanent magnet arrays are interlaced at intervals, and magnetic poles of the rail permanent magnet arrays and magnetic poles of the on-board permanent magnet arrays repel each other; the distance sensors are used for detecting a gap $s$ between the on-board permanent magnet arrays and the rail permanent magnet arrays, and outputting electrical signals to the control unit according to the gap $s$; the control unit is further connected to choppers, and is used for outputting a duty cycle signal to the choppers according to the electrical signals of the distance sensors; the choppers are connected to the control unit and the electromagnet; the choppers are used for outputting excitation current with a corresponding magnitude to the electromagnet according to the duty cycle signal, and the excitation current excites magnetic fields to maintain no contact between the rail permanent magnet arrays and the on-board permanent magnet arrays;

the duty cycle of the duty cycle signal is $PWM = k_p (s-s_0) + k_i \int (s - s_0)dt + k_d \int (s - s_0)''dt$,

wherein $k_p$ represents a proportional coefficient, $k_i$ represents a gap integral feedback coefficient, $k_d$ represents a differential coefficient, and $s_0$ represents a rated guiding gap; and the proportional coefficient $k_p$, the gap integral feedback coefficient $k_i$, the differential coefficient $k_d$ and the rated guiding gap $s_0$ are preset in the control unit.

Preferably, stainless steel fixing plates are arranged on surfaces of the rails, and the rail permanent magnet arrays are fixed to surfaces of the stainless steel fixing plates through stainless steel bolts; and stainless steel fixing plates are arranged on surfaces of the on-board magneto-electric rails, and the on-board permanent magnet arrays are fixed to surfaces of the stainless steel fixing plates through stainless steel bolts.

At least two distance sensors are arranged, and at least two pairs of electromagnets are oppositely arranged;

the control unit receives the electrical signals of the distance sensors, and obtains gaps $s_1$, $s_2$, ..., $s_n$ between the on-board permanent magnet arrays in the on-board magneto-electric rails and the rail permanent magnet arrays according to the electrical signals, wherein $n$ represents the number of the distance sensors;

the control unit controls the magnitude of the excitation current in the electromagnets according to the gaps $s_1$, $s_2$, ..., $s_n$;

wherein excitation current in the electromagnets located on a front side is:

$$I_l \propto k_p (s_i \text{-} s_0) + k_i \int (s_i - s_0) dt + k_d \int (s_i - s_0)'' dt, \quad l \in [1, n]$$ ,

wherein $s_i$ represents the size of gaps collected by the distance sensors on the front side;

excitation current in the electromagnets located on a rear side is:

$$I_m \propto k_p (\overline{s} \text{-} s_0) + k_i \int (\overline{s} - s_0) dt + k_d \int (\overline{s} - s_0)'' dt, \quad m \in [1, n]$$ ,

wherein $\overline{s} = \frac{1}{N} \sum_{i=1}^{N} s_i, \quad N \leq n$ ; and

the excitation current $I_l$ in the electromagnets located on the front side and the excitation current $I_m$ in the electromagnets located on the rear side respectively excite magnetic fields in opposite directions, and the magnetic fields in the opposite directions respectively generate mutually repulsive forces, so that the rail permanent magnet arrays do not contact with the on-board permanent magnet arrays.

Preferably, the rail permanent magnet arrays and the on-board permanent magnet arrays comprise at least two neodymium iron boron permanent magnet layers. an epoxy resin interlayer is arranged between every two adjacent neodymium iron boron permanent magnet layers, and a thickness of the epoxy resin interlayer is at least 3/10 of a thickness of neodymium iron boron permanent magnets, wherein, each neodymium iron boron permanent magnet layer comprises at least one row of neodymium iron boron permanent magnets arranged in a straight line, and a gap is formed between every two adjacent neodymium iron boron permanent magnets in each row.

The present invention has the following beneficial effects:

according to a suspened system adopting the raisl and the on-board magneto-electric rails and the suspended rail equipment adopting the system, the on-board magneto-electric rails include at least two rows of on-board permanent magnet arrays arranged in the running direction of the compartment, at least one pair of electromagnets and the distance sensors; and the rails include the rail permanent magnet arrays, the rail permanent magnet arrays and the on-board permanent magnet arrays are interlaced at intervals, and the rails and the on-board magneto-electric rails are self-stabilized through mutually repelling magnetic poles. Meanwhile, the distance sensors, the control unit and the electromagnets form a closed-loop control system, wherein the control unit controls the magnitude of the excitation current in the electromagnets through data of the distance sensors, so that the excitation current excites the magnetic field to maintain no contact between the rail permanent magnet arrays and the on-board permanent magnet arrays to realize suspension.

Since the permanent magnet arrays form a self-stabilization suspension system, the vibration is slight during load operation. Moreover, due to the closed-loop control, the electromagnets can excite mutually repelling magnetic fields with low excitation current so as to ensure that the rail permanent magnet arrays do not contact the on-board permanent magnet arrays, the equipment can be protected from tight attraction, device mechanical abrasion and electric heating loss are less, and the service life is longer.

Other features and advantages of the present invention will be described in the following description, and partly become obvious from the description, or are understood by implementing the present invention.

**Brief Description of Drawings**

The accompanying drawings are used to provide further understanding of the present invention, and constitute a part of the specification, together with the embodiments of the present invention, are used to explain the present invention, and do not constitute a limitation to the present invention. In the figures:

Fig. 1a is a right structural view of a two-layer permanent magnet array;

Fig. 1b is a front structural view of a two-layer permanent magnet array;

Fig. 2 is a top view of on-board magneto-electric rails of a suspended magnetic suspension train;

Fig. 3 is a schematic diagram of a bogie of a suspended magnetic suspension train;

Fig. 4 shows permanent magnet rails installed in a overhead beam of a suspended magnetic suspension train;

Fig. 5a is a cross-sectional view of on-board magneto-electric rails inserted into permanent magnet rails without contact;

Fig. 5b is a three-dimensional view of on-board magneto-electric rails inserted into permanent magnet rails without contact;

Fig. 6 is a cross-sectional view of on-board magneto-electric rails tightly attracted to permanent magnet rails in a negative x direction;

Fig. 7 is a cross-sectional view of on-board magneto-electric rails tightly attracted to permanent magnet rails in a positive x direction;

Fig. 8 is a cross-sectional view of a suspended overhead beam and magneto-electric hybrid suspension rails of a suspended magnetic suspension train;

Fig. 9a is a top view of mechanically guided on-board magnetic rails;

Fig. 9b is a three-dimensional view of mechanically guided on-board magnetic rails inserted into permanent magnet rails;

Fig. 10 is a top view of four magneto-electric hybrid suspension rails formed by inserting on-board magneto-electric rails installed at four positions ABCD of a bogie of a suspended magnetic suspension train into permanent magnet rails without contact;

Fig. 11 is a schematic structural diagram of a guiding control system of a magneto-electric hybrid suspension rail system according to the present invention;

Fig. 12 is a structural diagram of two sets of triangular suspension frames; and

Fig. 13 is a top view of an air spring position.

## Detailed Description of the Embodiments

The preferred embodiments of the present invention will be described below with reference to the accompanying drawings. It should be understood that the preferred embodiments described herein are only used to illustrate and explain the present invention, and are not used to limit the present invention.

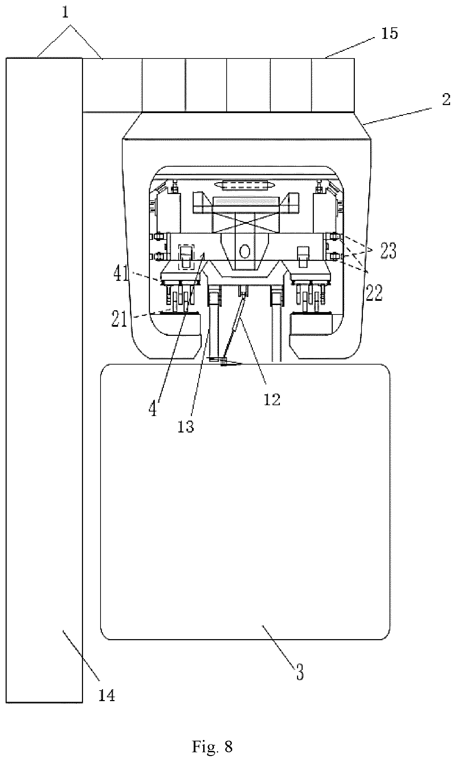

Suspended rail transit equipment is described in detail below, wherein as shown in Fig. 8, the suspended rail transit equipment includes:
a support structure 1; a suspended overhead beam 2 supported by the support structure in the air; a compartment 3 of which the top is provided with a plurality of compartment booms 13, and top ends and bottom ends of the compartment booms 13 provided with buckles; and a bogie 4, a first end of the bogie arranged in the suspended overhead beam, and a second end of the bogie connected to the compartment 3, wherein the suspension bogie 4 and the compartment 3 are connected through the booms 13.

The support structure 1 includes an upright column 14 and a suspension beam 15. A top of the upright column 14 is curved toward one side to form the horizontal suspension beam 15. The overhead beam 2 is suspended below the suspension beam 15, and a bottom of the upright column 14 is fixed together with the ground in a contact manner.

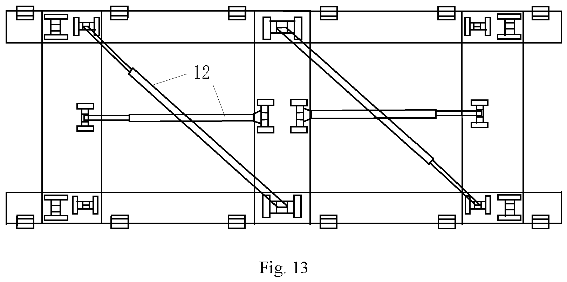

As shown in Fig. 13, a plurality of air springs 12 are arranged between the compartment booms 13, and the air springs 12 are obliquely connected from one side of the suspension bogie 4 to an opposite side of the compartment 3, and the middle of the suspension bogie 4 is also provided with air spring 12 buckles for connecting the bogie with the compartment in a front and back direction (a running direction indicates the front) from a top end of one of the compartment booms 13 to a bottom end of another compartment boom 13.

A top of the compartment 3 is provided with a compartment set-top box, the compartment set-top box is fixed on the top of the compartment 3 through a set-top box control, and the compartment set-top box is provided with a plurality of air springs 12, the air springs 12 are inclined in a running direction of the compartment 3, and upper ends of the air springs 12 are connected to the suspension bogie 4 through the air spring 12 buckles.

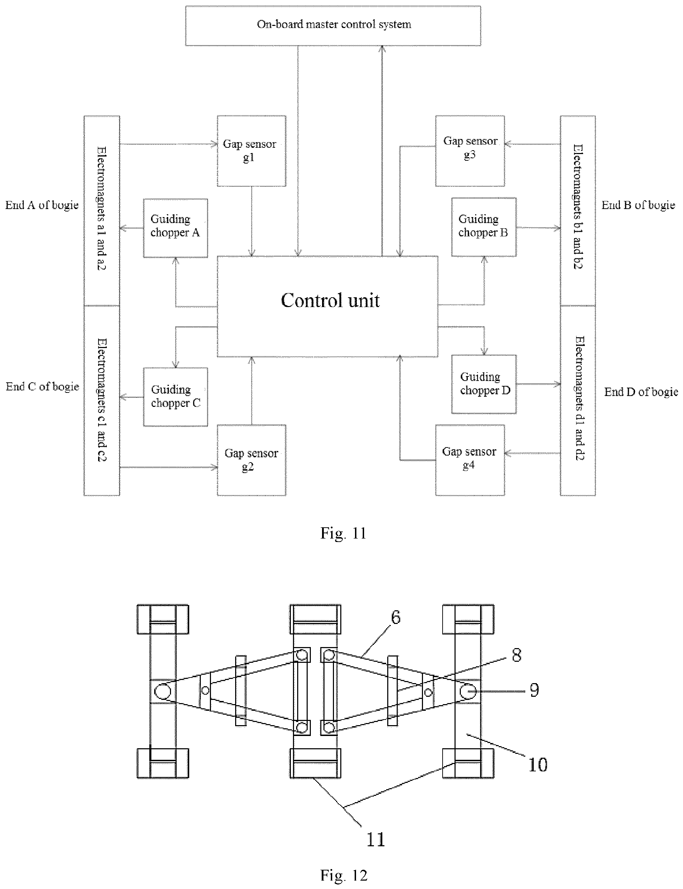

As shown in Fig. 12, the compartment is further provided with suspension buckles 8, buckles of the booms 13 are connected to the suspension buckles 8 of the compartment, and two sets of triangular suspension frames 6 are arranged between the booms 13 and the compartment. Short sides of the triangular suspension frames 6 are arranged oppositely and arranged in a rail extension direction. Each vertex of the triangular suspension frames 6 is provided with a spherical hinge structure 9; and two ends of the triangular suspension frames 6 are provided with horizontally arranged beams 10 perpendicular to the rail extension direction, the opposite short sides of the triangular suspension frames 6 share one single beam 10, the triangular suspension frames 6 are connected to centers or two sides of the beams 10, and two ends of each beam 10 are located on suspension points 11.

A control unit 5 is used for controlling the compartment to run along the suspended overhead beam; wherein an inner wall of the suspended overhead beam is provided with rails 21; on-board magneto-electric rails 41 are arranged at positions, opposite to the rails, of a surface of the bogie; the on-board magneto-electric rails include at least two rows of on-board permanent magnet arrays 411 arranged in the running direction of the compartment; at least one pair of electromagnets 412 are further symmetrically arranged on the on-board permanent magnet arrays in the running direction of the compartment; the on-board permanent magnet arrays are further provided with distance sensors 413; the electromagnets and the distance sensors are connected to the control unit respectively; the rails include at least one row of rail permanent magnet arrays, the rail permanent magnet arrays and the on-board permanent magnet arrays are interlaced at intervals, and magnetic poles of the rail permanent magnet arrays and magnetic poles of the on-board permanent magnet arrays repel each other; the distance sensors are used for detecting gaps between the on-board permanent magnet arrays and the rail permanent magnet arrays, or are used for detecting gaps between the on-board permanent magnet arrays and the inner wall of the suspended overhead beam, and outputting electrical signals to the control unit according to the sizes of the gaps; the control unit is further used for controlling the magnitude of excitation current in the electromagnets according to the electrical signals of the distance sensors, and the excitation current excites a magnetic field to maintain no contact between the rail permanent magnet arrays and the on-board permanent magnet arrays.

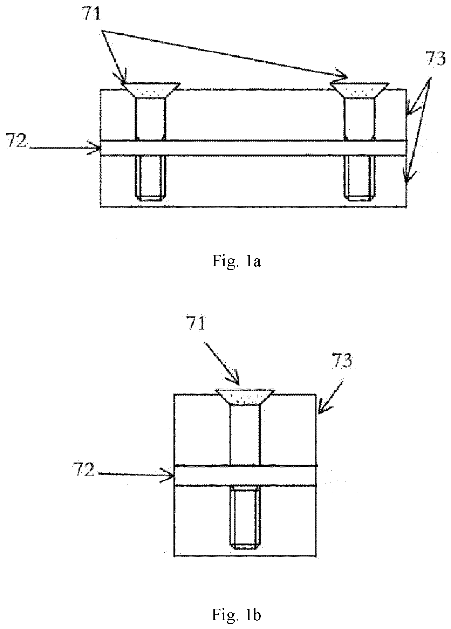

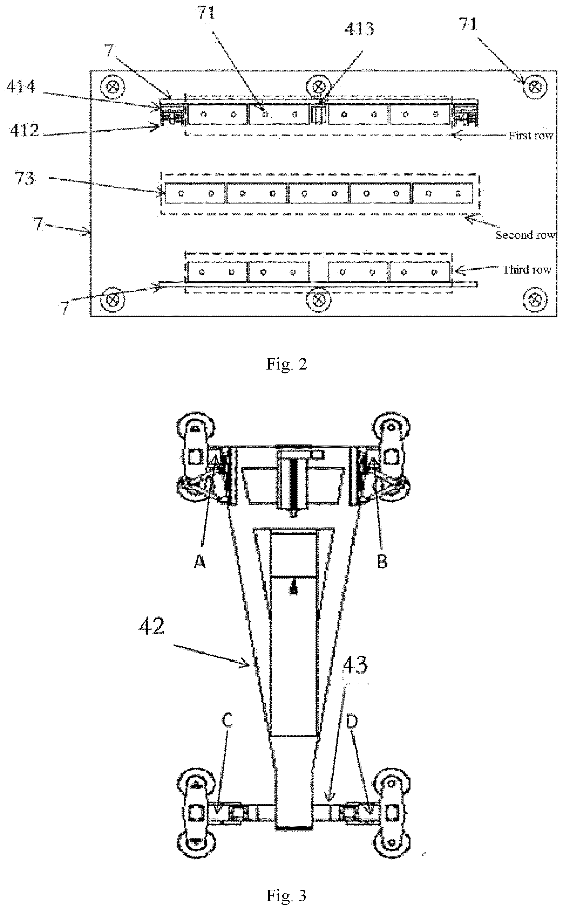

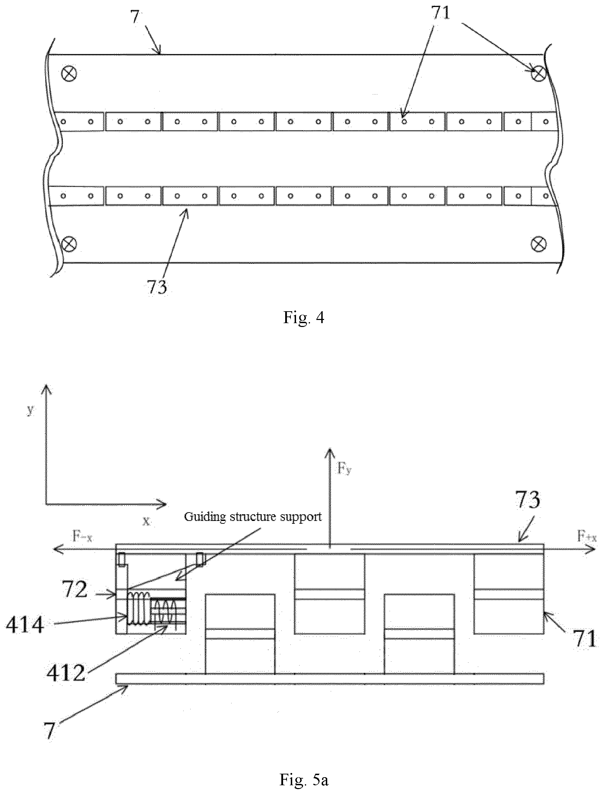

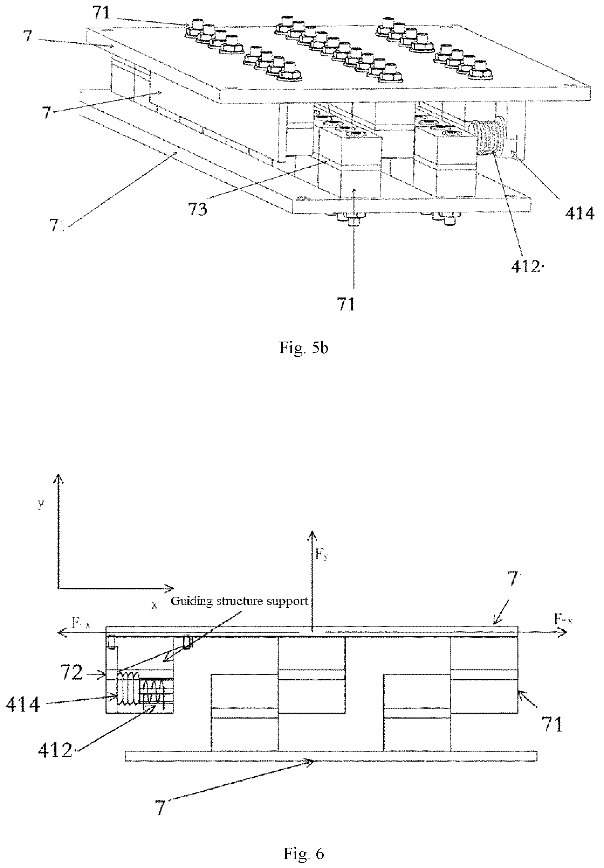

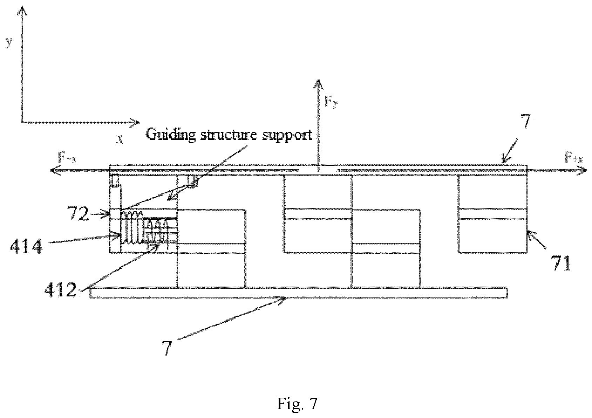

In the above equipment, due to a magneto-electric hybrid suspension rail system, the suspension train can be suspended by the spaced and interlaced permanent magnet arrays, an electromagnetic force is generated by windings of the electromagnets, and the electromagnetic force and a lateral force of the permanent magnets can realize train guidance together, thereby forming a novel magneto-electric hybrid suspension rail system integrating permanent magnet suspension and magneto-electric hybrid guidance. Such magneto-electric hybrid suspension rails mainly include on-board magneto-electric rails and permanent magnet rails. The top view and three-dimensional diagram of the on-board magneto-electric rails are shown in Fig. 2. The on-board magneto-electric rails are composed of multiple sets of permanent magnet arrays, sensors and electromagnetic windings; the permanent magnet arrays are shown in Fig. 1a and Fig. 1b, and the permanent magnet arrays are formed by stacking two permanent magnet layers. As shown in Fig. 8, the on-board magneto-electric rails are installed on the bogie of the suspended magnetic suspension train, and the permanent magnet rails are installed on a base in the suspended overhead beam. As shown in Figs. 5a and 5b, the on-board magneto-electric rails are inserted into the permanent magnet rails without contact at a center suspension position, and therefore a repulsive force $F_y$ is generated in a y direction to enable the suspended train to suspend stably. When the on-board magneto-electric rails suspend at the center position, an attractive force $F_{+x}$ is generated in a positive x direction, an attractive force $F_{-x}$ is also generated in a negative x direction, wherein $F_{+x} = F_{-x}$ at the moment. In the case that the on-board magneto-electric rails are not subjected to electromagnetic guidance adjustment, when the on-board magneto-electric rails deviate from the center suspension position in the negative x direction, $F_{-x} > F_{+x}$ is achieved, and the on-board magneto-electric rails are tightly attracted to the permanent magnet rail as shown in Fig. 6 at the moment. When the on-board magneto-electric rails deviate from the center suspension position in the positive x direction, $F_{+x} > F_{-x}$ is achieved, and the on-board magneto-electric rails are tightly attracted to the permanent magnet rails as shown in Fig. 7 at the moment. The effect of applying an electromagnetic guiding force to the on-board magneto-electric rails is to maintain the running of the on-board magneto-electric rails at rated guiding gaps and prevent the on-board magneto-electric rails from being tightly attracted to the rails. Optionally, in the above suspended rail transit equipment, the rail permanent magnet arrays or the on-board permanent magnet arrays include at least two permanent magnet layers 73 in a vertical direction, and an epoxy resin interlayer 72 is arranged between the permanent magnets in each layer. Therefore, it can be ensured that the permanent magnets can provide sufficient suspension force and a suspension structure is simplified. This patent adopts an N48 neodymium iron boron permanent magnet material. As shown in the schematic diagrams of Figs. 1a and 1b, two pieces of neodymium iron boron permanent magnets with material mark N48 are fixed together through stainless steel bolts 71 to form a two-layer permanent magnet array structure, and according to the needs of the suspended load, a three-layer or multi-layer magnetic array structure may be formed. The present invention is described with a two-layer permanent magnet array. Two permanent magnets 73 are separated by an epoxy resin plate with a thickness of 3 mm, so that magnetic field lines of upper-layer and lower-layer permanent magnets are prevented from excessive short circuit. The bolts are stainless steel bolts as stainless steel is a non-ferromagnetic material which can alleviate the influence on magnetic circuits of the permanent magnets.

In a preferred embodiment, the neodymium iron boron permanent magnet is a cuboid with a length of 30 mm, a width of 15 mm and a thickness of 10 mm. Certainly, the size is not fixed and can be adjusted according to actual usage.

Optionally, in the above suspended rail transit equipment, at least one side of each of the electromagnets 412 is provided with a rubber spring.

Optionally, in the above suspended rail transit equipment, at least two parallel rails are included, and at least four sets of on-board magneto-electric rails are included; the first end of the bogie further includes a beam 43 and a frame 42; and the sets of on-board magneto-electric rails are connected to the frame through the beam.

Optionally, in the above suspended rail transit equipment, the control unit receives the electrical signals of the distance sensors in the sets of on-board magneto-electric rails respectively, and obtains gaps $s_1$, $s_2$, ..., $s_n$ between the on-board permanent magnet arrays in the sets of on-board magneto-electric rails and the rail permanent magnet arrays according to the electrical signals, wherein $n$ represents the number of sets of the on-board magneto-electric rails. The control unit controls the magnitude of the excitation current in each electromagnet according to the gaps $s_1$, $s_2$, ..., $s_n$, and the excitation current in the electromagnets located on one side is $I_l \propto k_p (s_i\text{-}s_0) + k_i \int (s_i - s_0)dt + k_d \int (s_i - s_0)''dt$, $l \in [1, n]$, wherein $s_i$ represents a gap corresponding to the on-board magneto-electric rail where the electromagnets are located; the excitation current in the electromagnets located on the other side, such as a left side or a front side, is $I_m$

$$\overline{s} = \frac{1}{N} \sum_{i=1}^{N} s_i, \quad N \leq n$$

$\propto k_p (\overline{s}\text{-}s_0) + k_i \int (\overline{s} - s_0)dt + k_d \int (\overline{s} - s_0)''dt$, $m \in [1, n]$, wherein ; the excitation current $I_m$ in the electromagnets on the other side and the excitation current $I_l$ in the electromagnets on one side respectively excite magnetic fields in opposite directions, and the magnetic fields in the opposite directions respectively generate mutually repulsive forces, so that the rail permanent magnet arrays do not make contact with the on-board permanent magnet arrays; wherein $k_p$ represents a proportional coefficient, $k_i$ represents a gap integral feedback coefficient, $k_d$ represents a differential coefficient, and $s_0$ represents a rated guiding gap; and the proportional coefficient $k_p$, the gap integral feedback coefficient $k_i$, the differential coefficient $k_d$ and the rated guiding gap $s_0$ are all preset in the control unit.

As an optional embodiment, the on-board magneto-electric rails can be inserted into the permanent magnet rails without contact as shown in Fig. 5a, Fig. 5b, Fig. 8 and Fig. 10 to form a magneto-electric hybrid suspension rail system, and the system can suspend stably in a vertical y direction, and is high in suspension rigidity. However, stable guiding suspension cannot be achieved in an x direction because the on-board magneto-electric rails may be tightly attracted to the permanent magnet rails as long as deviating from the center suspension position. As shown in Fig. 6, the on-board magneto-electric rails deviate towards the negative x direction and are tightly attracted to the permanent magnet rails. Fig. 7 shows that the on-board magneto-electric rails deviate towards the positive x direction and are tightly attracted to the permanent magnet rails. In order to guide the train and avoid tight attraction, the sizes of the magnetic fields in the electromagnets can be controlled by controlling the magnitude of the current in the electromagnets, and finally the magnitude of the electromagnetic force of the electromagnets is controlled, so that the on-board magneto-electric rails can run at the rated guiding gap. Since the width of the permanent magnet array is 15 mm and the distance between the two rows of permanent magnet rails is 21 mm, when the on-board magneto-electric rails are inserted into the permanent magnet rails at the center position without contact, the gap between the on-board magneto-electric rails and the two rows of permanent magnet rails is 3 mm, and is set as the rated guiding gap.

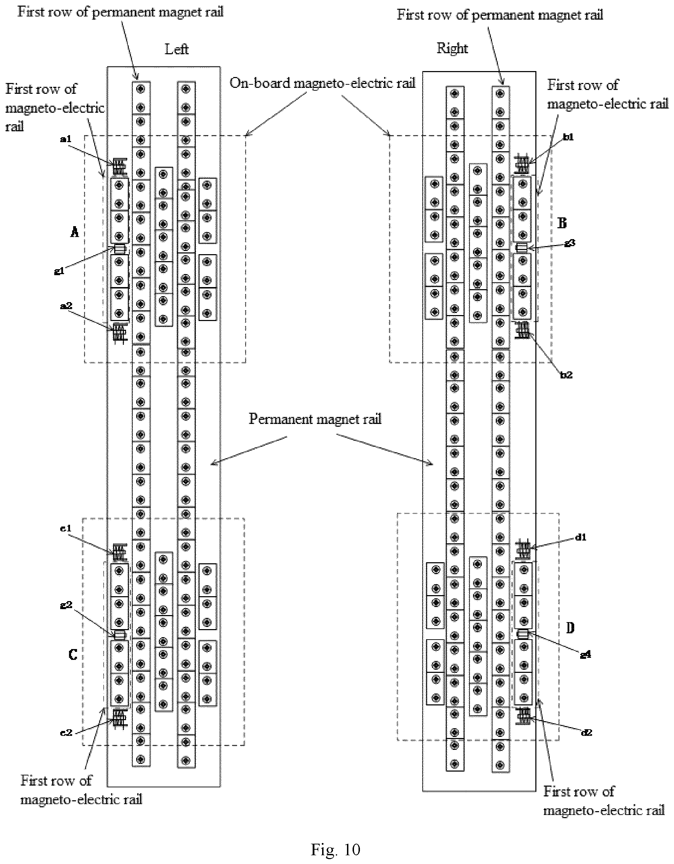

Specifically, as shown in Fig. 10, the on-board magneto-electric rails installed at the two positions A and C of the bogie of the suspended magnetic suspension train adopt equal-gap control, so that the on-board magneto-electric rails at the two positions A and C keep running at the rated guiding gap; and the on-board magneto-electric rails at the two positions B and D of the bogie of the suspended magnetic suspension train are cooperatively controlled by integrating the states of the on-board magneto-electric rails at the two positions B and D, so that an average guiding gap of the on-board magneto-electric rails at the positions B and D is maintained to be the rated guiding gap. As shown in Fig. 10, gap sensors g1 and g2 at the two positions A and C respectively measure a guiding gap between the first row of permanent magnet rails on the left and the first row of on-board magneto-electric rails at an end A, and a guiding gap between the first row of permanent magnet rails on the left and the first row of on-board magneto-electric rails at an end C; gap sensors g3 and g4 at the two positions B and D respectively measure a guiding gap between the first row of permanent magnet rails on the right and the first row of on-board magneto-electric rails at an end B, and a guiding gap between the first row of permanent magnet rails on the right and the first row of on-board magneto-electric rails at an end D. The schematic structural diagram of a guiding control system is as shown in Fig. 11. Electromagnets a1 and a2 at the end A of the bogie are connected in series to be used as a single electromagnet equivalently at first, and similarly, electromagnets b1 and b2 at the end B of the bogie, electromagnets c1 and c2 at the end C of the bogie, and electromagnets d1 and d2 at the end D of the bogie are correspondingly connected in series so that the two electromagnets at each end are used as a single electromagnet equivalently. The gap sensor g1 measures the guiding gap $s_1$ at the end A of the bogie, and a guiding controller obtains a control value PWM.A of the electromagnets at the end A of the bogie through a control algorithm $PWM.A = k_p (s_1 - s_0) + k_i \int (s_1 - s_0)dt + k_d \int (s_1 - s_0)''dt$ according to the guiding gap, wherein $k_p$ represents a proportional coefficient, $k_i$ represents a gap integral feedback coefficient, $k_d$ represents a differential coefficient, and $s_0$ represents a rated guiding gap. PWM.A is output in a PWM wave form to a guiding chopper A to control the current of the electromagnets a1 and a2 at the end A of the bogie, and further to control the electromagnetic force of the end A of the bogie, thereby ensuring that the end A of the bogie runs at the rated guiding gap. The gap sensor g2 measures the guiding gap $s_2$ at the end C of the bogie, and the guiding controller obtains a control value PWM.C of the electromagnets at the end C of the bogie through a control algorithm $PWM.C = k_p (s_2 - s_0) + k_i \int (s_2 - s_0)dt + k_d \int (s_2 - s_0)''dt$ according to the guiding gap $s_2$, the PWM.C to is output to a guiding chopper C in a PWM wave form to control the current of the electromagnets c1 and c2 at the end C of the bogie, and further to control the electromagnetic force of the end C of the bogie, thereby ensuring that the end C of the bogie runs at the rated guiding gap. The gap sensor g3 measures the guiding gap $s_3$ at the end B of the bogie, and the gap sensor g4 measures the guiding gap $s_4$ at the end D of the bogie, the guiding controller obtains a control value PWM.B of the electromagnets at the end B of the bogie based on the guiding gaps $s_3$ and $s_4$ through a control algorithm $PWM.B = k_p (s_{34} - s_0) + k_i \int (s_{34} - s_0)dt + k_d \int (s_{34} - s_0)''dt$, and the PWM.B is output to the a guiding chopper B in a PWM wave form to control the current of the electromagnets b1 and b2 at the end B of the bogie, and further to control the electromagnetic force of the end B of the bogie, thereby ensuring that the end B of the bogie runs at the rated guiding gap. $s_{34}$ represents the average guiding

$$s_{34} = \frac{s_3 + s_4}{2}$$

gap at the ends B and D of the bogie, . The guiding controller obtains a control value PWM.D of the electromagnets at the end D of the bogie according to the guiding gaps $s_3$ and $s_4$ through a control algorithm $PWM.D = k_p (s_{34} - s_0) + k_i \int (s_{34} - s_0)dt + k_d \int (s_{34} - s_0)''dt$, the PWM.D is output in a PWM wave form to a guiding chopper D, to control the current of the electromagnets b1 and b2 at the end D of the bogie, and further to control the electromagnetic force of the end D of the bogie, thereby ensuring that the end D of the bogie runs at the rated guiding gap. At the same time, a suspension controller transmits the state of each guiding gap to an on-board master control system in real time, and the on-board master control system monitors the guiding state of the train in real time. The on-board master control system transmits reset, stop and other instructions to the guiding controller.

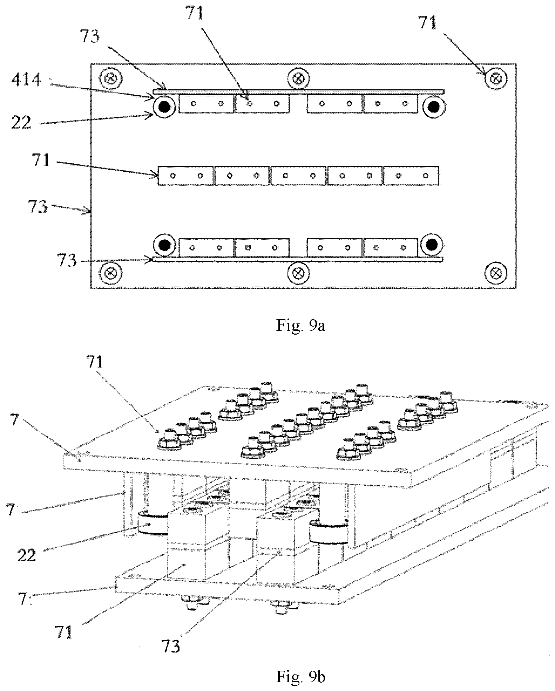

Optionally, in the above suspended rail transit equipment, an outer side of the bogie is further connected to guide wheels; wheel rails are arranged at the position, opposite to the guide wheels, of the inner wall of the suspended overhead beam, and a gap is reserved between the guide wheels and the wheel rails. Fig. 9a shows on-board magnetic rails guided by mechanical guide wheels, and mechanical guidance can be achieved by installing guide wheels at four ends of the on-board magnetic rails. Fig. 9b shows mechanically guided on-board magnetic rails inserted into the permanent magnet rails to achieve suspension and guidance. A mechanical guidance mode in which the guide wheels are installed on the on-board magneto-electric rails and an electromagnetic guidance mode in which the electromagnets are installed on the on-board magneto-electric rails can guide the suspended magnetic suspension train when the lateral force applied to the suspended magnetic suspension train is small in the running direction, and when the lateral force is large, guide adjusting wheels on the bogie guide the train to run smoothly, and the structure is as shown in Fig. 8. The suspended magnetic suspension train adopts the electromagnetically guided on-board magneto-electric rails to perform suspension support and guidance on the train.

Meanwhile, the present invention provides a magneto-electric hybrid suspension rail system which includes a control unit 5, rails 21 and on-board magneto-electric rails 41, the rails and the on-board magneto-electric rails are arranged oppositely; the on-board magneto-electric rails include at least two rows of on-board permanent magnet arrays 411; each on-board permanent magnet array is further provided with at least one electromagnet 412, and a magnetic pole of the electromagnet is perpendicular to a direction of the rails; the on-board permanent magnet arrays are further provided with distance sensors 413; the electromagnets and the distance sensors are connected to the control unit respectively; the rails include at least one row of rail permanent magnet arrays, the rail permanent magnet arrays and the on-board permanent magnet arrays are interlaced at intervals, so that magnetic poles of the rail permanent magnet arrays and the magnetic poles of the on-board permanent magnet arrays repel each other; the distance sensors are used for detecting a gap $s$ between the on-board permanent magnet arrays and the rail permanent magnet arrays, and outputting electrical signals to the control unit according to the gap $s$; the control unit is further connected to choppers 51; the control unit is used for outputting a duty cycle signal to the choppers according to the electrical signals of the distance sensors; the choppers are connected to the control unit and the electromagnets, and are used for outputting excitation current with a corresponding magnitude to the electromagnets according to the duty cycle signal, the excitation current excites a magnetic field to maintain no contact between the rail permanent magnet arrays and the on-board permanent magnet arrays; the duty cycle of the duty cycle signal is $PWM = k_p (s-s_0) + k_i \int (s - s_0)dt + k_d \int (s - s_0)''dt$,

wherein $k_p$ represents a proportional coefficient, $k_i$ represents a gap integral feedback coefficient, $k_d$ represents a differential coefficient, and $s_0$ represents a rated guiding gap; and the proportional coefficient $k_p$, the gap integral feedback coefficient $k_i$, the differential coefficient $k_d$ and the rated guiding gap $s_0$ are all preset in the control unit.

In the above system, the top view and the three-dimensional view of the on-board magneto-electric rails are shown in Figs. 2. The on-board magneto-electric rails are installed at four positions A, B, C, and D of the bogie as shown in Fig. 3 and form a four-point suspension system, but a six-point or multi-point suspension system may be also formed based on the bogie structure and load requirements of an actual suspension magnetic suspension train. By taking the four-point suspension system as an example, the permanent magnet rails are as shown in Fig. 4, when applied to the suspended magnetic suspension equipment, the permanent magnet rails may be installed in the suspended overhead beam, and the on-board magneto-electric rails may be inserted into the permanent magnet rails without contact, so that the repulsive force is formed to maintain stable suspension of the train. The cross-sectional view and three-dimensional view of the on-board magneto-electric rails inserted into the permanent magnet rails are as shown in Fig. 5a and Fig. 5b, and the cross-sectional view of magneto-electric hybrid suspension rails in the suspended overhead beam of the suspended magnetic suspension train, the bogie of the suspended magnetic suspension train and other devices is as shown in Fig. 8. The on-board magneto-electric rails are inserted into the permanent magnet rails to form a magneto-electric hybrid suspension rail system which is high in stability and rigidity in the y direction, and does not vibrate severely during load suspension. However, in the x direction of the magneto-electric hybrid suspension rail system, the on-board magneto-electric rails are tightly attracted to the permanent magnet rails after deviating from the center suspension position, as shown in Figs. 6 and 7, Fig. 6 shows that the on-board magneto-electric rails are tightly attracted to the permanent magnet rails in the negative x direction after deviating from the center suspension positions, and Fig. 7 shows that the on-board magneto-electric rails are tightly attracted to the permanent magnet rails in the positive x direction after deviating from the center suspension positions. Tight attraction causes serious consequences, not only brings harm to the magnetic rails, but also brings safety hazards to the suspended magnetic suspension train in running. In order to solve the problem of tight attraction through the scheme, electromagnets and gap sensors are installed on the on-board magneto-electric rails. The schematic diagram of the installation positions of the electromagnets and the gap sensors is shown in Fig. 2. The electromagnets and the gap sensors are installed at the installation positions as shown in Fig. 2 because the bogie of the suspended magnetic suspension train provided with the on-board magneto-electric rails is symmetrical in the suspended overhead beam, and the electromagnets are easy to control by arranging the electromagnets and the gap sensors in an installation mode as shown in Fig. 2, and further the suspended magnetic suspension train can run at the rated guiding gap. The gap sensors measure a relative distance between the on-board magneto-electric rails and the permanent magnet rails in the x direction, the size of the magnetic field generated by the electromagnets is controlled by adjusting the current in the electromagnets, and finally, the electromagnetic force of the electromagnets in the x direction is controlled, so that the guiding effect on the on-board magneto-electric rails is achieved, and the suspended magnetic suspension train can run at the rated guiding gap in the x direction. In addition to the electromagnetic guidance mode, the mechanical guidance mode can also be adopted.

Optionally, in the above magneto-electric hybrid suspension rail system, the surfaces of the rails are provided with stainless steel fixing plates 7; the rail permanent magnet arrays are fixed to the surfaces of the stainless steel fixing plates by stainless steel bolts; the surfaces of the on-board magneto-electric rails are provided with stainless steel fixing plates; and the on-board permanent magnet arrays are fixed on the surfaces of the stainless steel fixing plates by stainless steel bolts. As shown in Fig. 2, a two-layer permanent magnet array structure may be selected to be installed and fixed on the surfaces of a stainless steel plate with a thickness of 5 mm by stainless steel bolts. Three rows of permanent magnet arrays as shown in Fig. 1a are installed on the stainless steel plate, the first row of permanent magnet arrays are separated from the second row of permanent magnet arrays by 21 mm, and the second row of permanent magnet arrays are separated from the third row of permanent magnet arrays by 21 mm; as shown in Fig. 2, the first row and the third row are each provided with four sets of permanent magnet arrays, and the permanent magnet arrays in each set are separated by 1 mm; and the second row is provided with five sets of permanent magnet arrays, and the permanent magnet arrays of each set are separated by 1 mm. Electromagnets and a gap sensor are further installed in the permanent magnet arrays in the first row. The gap sensor is installed in the middle of the first row of permanent magnet arrays, and the electromagnets are installed at two ends of the first row of permanent magnet arrays to form a two-point electromagnetic guidance system, meanwhile, one pole of each electromagnet is fixed on a rubber spring 414 to achieve the effect of vibration reduction, and the other pole of each electromagnet is a working pole to generate the electromagnetic force, thereby providing a guiding force. The distance sensors may specifically adopt gap sensors, and are used for measuring the distance between the on-board magneto-electric rails and the permanent magnet rails to further provide a guiding gap feedback quantity to a control system, thereby achieving the purpose of controlling the current in the electromagnets and realizing the purpose of stable guidance of the suspended magnetic suspension train. The on-board magneto-electric rails are installed on the bogie of the train and are connected by the rubber springs.

As shown in Fig. 4, the two-layer permanent magnet array structure is fixed on a stainless steel plate with a thickness of 5 mm by stainless steel bolts to form the permanent magnet rails. The permanent magnet rails are composed of two rows of permanent magnet arrays, the distance between the two rows of permanent magnet arrays is 21 mm, and the permanent magnet arrays in each set are separated by 1 mm in the running direction of the train. It should be noted that this value is not fixed and can be adjusted according to the actual situation. The rail permanent magnet arrays and the on-board permanent magnet arrays are not only fixed by the stainless steel bolts, and also can be fixed by other modes as long as the rail permanent magnet arrays and the on-board permanent magnet arrays can be stably fixed on the stainless steel fixing plates, and it can be understood that the above scheme of the present invention only provide a preferred embodiment.

Optionally, in the above magneto-electric hybrid suspension rail system, at least two distance sensors are arranged, and at least two pairs of electromagnets arranged oppositely are included. Specific to this embodiment, the on-board magneto-electric rails may be installed at the four positions A, B, C, and D of the bogie of the suspended magnetic suspension train to form a four-point magnetic suspension system, and then the on-board magneto-electric rails are inserted into the permanent magnet rails without contact to form a magneto-electric hybrid suspension rail system so as to realize suspension of the train. The control unit receives the electrical signals of the distance sensors, and obtains gaps $s_1$, $s_2$, .. , $s_n$ between the on-board permanent magnet arrays in the on-board magneto-electric rails and the rail permanent magnet arrays according to the electrical signals, wherein $n$ is 4 and represents the number of the distance sensors; the control unit controls the magnitude of the excitation current in the electromagnets according to the gaps $s_1$, $s_2$, ..., $s_n$, and the excitation current in the electromagnets located on the front side is $I_l \propto k_p (s_i - s_0) + k_i \int (s_i - s_0)dt + k_d \int (s_i - s_0)''dt$, $l \in [1, n]$, wherein $s_i$ represents the size of the gap collected by the distance sensors on the front side; the excitation current in the electromagnets located on the rear side is $I_m \propto k_p (\bar{s} - s_0) + k_i \int (\bar{s} - s_0)dt + k_d \int (\bar{s}$

$$\bar{s} = \frac{1}{N} \sum_{i=1}^{N} s_i, \quad N \leq n$$

$- s_0)''dt$, $m \in [1, n]$, wherein ; the excitation current $I_l$ in the electromagnets located on the front side and the excitation current $I_m$ in the electromagnets located on the rear side respectively excite magnetic fields in opposite directions, and the magnetic fields in the opposite directions respectively generate mutually repulsive forces, so that the rail permanent magnet arrays do not contact with the on-board permanent magnet arrays.

Optionally, the rail permanent magnet arrays or the on-board permanent magnet arrays include: at least two neodymium iron boron permanent magnet layers; an epoxy resin interlayer is arranged between every two adjacent neodymium iron boron permanent magnet layers, and the thickness of the epoxy resin interlayer is at least 3/10 of the thickness of neodymium iron boron permanent magnets; wherein each neodymium iron boron permanent magnet layer includes: at least one row of neodymium iron boron permanent magnets arranged in a straight line, and a gap is formed between every two adjacent neodymium iron boron permanent magnets in each row.

The present invention has the advantages that:

the suspended magnetic suspension train can be stably suspended in the vertical y direction, has a great suspension rigidity in the y direction, and can be stably suspended in the y direction without manual control;

the magneto-electric hybrid suspension rail system is processed and produced in a modular mode and is simple in structure, convenient to debug, easy to install and convenient to maintain; and

the magneto-electric hybrid suspension rail system provides the suspension force by the permanent magnets, and provides the guiding force by the electromagnetic force of the electromagnets installed on the on-board magneto-electric rails, the attractive force $F_{+x}$ of the permanent magnets in the x direction, and the attractive force $F_{-x}$ of the permanent magnets in the negative x direction, and the system consumes less energy and conforms to the modern concept of "green transportation".

## Claims

1. A magneto-electric hybrid suspension rail system, comprising:

   a control unit (5);
   rails (21) and on-board magneto-electric rails (41), which are arranged opposite to each other,
   the on-board magneto-electric rails (41) comprise at least two rows of on-board permanent magnet arrays (411);
   each on-board permanent magnet array (411) is provided with at least one electromagnet (412), and a magnetic pole of the electromagnet (412) is perpendicular to a direction of the rails (21); the on-board permanent magnet arrays (411) are further provided with distance sensors (413); the electromagnet (412) and the distance sensors (413) are connected to the control unit (5);

the rails (21) comprise at least one row of rail permanent magnet arrays, the rail permanent magnet arrays and the on-board permanent magnet arrays (411) are interlaced at intervals, and magnetic poles of the rail permanent magnet arrays and magnetic poles of the on-board permanent magnet arrays (411) repel each other;

the distance sensors (413) are used for detecting a gap $s$ between the on-board permanent magnet arrays (411) and the rail permanent magnet arrays, and outputting electrical signals to the control unit (5) according to the gap $s$;

wherein,

the control unit (5) is further connected to choppers (51), and is used for outputting a duty cycle signal to the choppers (51) according to the electrical signals of the distance sensors (413);

the choppers (51) are connected to the control unit (5) and the electromagnet (412); the choppers (51) are used for outputting excitation current with a corresponding magnitude to the electromagnet (412) according to the duty cycle signal, and the excitation current excites magnetic fields to maintain no contact between the rail permanent magnet arrays and the on-board permanent magnet arrays (411);

the duty cycle of the duty cycle signal is $PWM = k_p\,(s-s_0) + k_i \int (s - s_0)dt + k_d \int (s - s_0)''dt$,

wherein $k_p$ represents a proportional coefficient, $k_i$ represents a gap integral feedback coefficient, $k_d$ represents a differential coefficient, and $s_0$ represents a rated guiding gap; and

the proportional coefficient $k_p$, the gap integral feedback coefficient $k_i$, the differential coefficient $k_d$ and the rated guiding gap $s_0$ are preset in the control unit (5).

2. The magneto-electric hybrid suspension rail system according to claim 1, **characterized in that**

stainless steel fixing plates are arranged on surfaces of the rails, and the rail permanent magnet arrays are fixed to surfaces of the stainless steel fixing plates through stainless steel bolts; and

stainless steel fixing plates are arranged on surfaces of the on-board magneto-electric rails, and the on-board permanent magnet arrays (411) are fixed to surfaces of the stainless steel fixing plates through stainless steel bolts.

3. The magneto-electric hybrid suspension rail system according to claim 2, **characterized in that** the rail permanent magnet arrays and the on-board permanent magnet arrays (411) comprise at least two neodymium iron boron permanent magnet layers. an epoxy resin interlayer is arranged between every two adjacent neodymium iron boron permanent magnet layers, and a thickness of the epoxy resin interlayer is at least 3/10 of a thickness of neodymium iron boron permanent magnets, wherein, each neodymium iron boron permanent magnet layer comprises at least one row of neodymium iron boron permanent magnets arranged in a straight line, and a gap is formed between every two adjacent neodymium iron boron permanent magnets in each row.

### Patentansprüche

1. Hybrides magnetoelektrisches Aufhängungsschienensystem, umfassend:

eine Steuereinheit (5);

Schienen (21) und bordeigene magnetoelektrische Schienen (41), die einander gegenüber angeordnet sind, wobei die bordeigenen magnetoelektrischen Schienen (41) mindestens zwei Reihen von bordeigenen Permanentmagnetanordnungen (411) umfassen; jede bordeigene Permanentmagnetanordnung (411) mit mindestens einem Elektromagneten (412) versehen ist und ein Magnetpol des Elektromagneten (412) senkrecht zu einer Richtung der Schienen (21) ist; die bordeigenen Permanentmagnetanordnungen (411) ferner mit Abstandssensoren (413) versehen sind; der Elektromagnet (412) und die Abstandssensoren (413) mit der Steuereinheit (5) verbunden sind;

die Schienen (21) mindestens eine Reihe von Schienenpermanentmagnet-Anordnungen umfassen, die Schienenpermanentmagnet-Anordnungen und die bordeigenen Permanentmagnetanordnungen (411) in Abständen verschachtelt sind und Magnetpole der Schienenpermanentmagnet-Anordnungen und Magnetpole der bordeigenen Permanentmagnetanordnungen (411) sich gegenseitig abstoßen;

die Abstandssensoren (413) verwendet werden, um einen Spalt S zwischen den bordeigenen Permanentmagnetanordnungen (411) und den Schienenpermanentmagnet-Anordnungen zu erfassen und elektrische Signale gemäß dem Spalt S an die Steuereinheit (5) auszugeben;

wobei die Steuereinheit (5) ferner mit Zerhackern (51) verbunden ist und verwendet wird, um gemäß den elektrischen Signalen der Abstandssensoren (413) ein Tastverhältnissignal an die Zerhacker (51) auszugeben;

die Zerhacker (51) mit der Steuereinheit (5) und dem Elektromagneten (412) verbunden sind; die Zerhacker (51) verwendet werden, um gemäß dem Tastverhältnissignal Erregerstrom mit einer entsprechenden Größe an den Elektromagneten (412) auszugeben, und der Erregerstrom Magnetfelder erregt, um keinen Kontakt zwischen den Schienenpermanentmagnet-Anordnungen und den bordeigenen Permanentmagnetanordnungen (411) aufrechtzuerhalten;

das Tastverhältnis des Tastverhältnissignals $PWM = k_p(s-s_0) + k_i \int (s - s_0)dt + k_d \int (s - s_0)''dt$ ist, wobei $k_p$ einen proportionalen Koeffizienten darstellt, $k_i$ einen integralen Spaltrückkopplungskoeffizienten darstellt, $k_d$ einen Differentialkoeffizienten darstellt und $S_0$ einen Nennführungsspalt darstellt; und der proportionale Koeffizient $k_p$, der Spaltrückkopplungskoeffizient $k_i$, der Differentialkoeffizient $k_d$ und der Nennführungsspalt $S_0$ in der Steuereinheit (5) voreingestellt sind.

2. Hybrides magnetoelektrisches Aufhängungsschienensystem nach Anspruch 1, **dadurch gekennzeichnet, dass** an Oberflächen der Schienen Edelstahlbefestigungsplatten angeordnet sind und die Schienenpermanentmagnet-Anordnungen durch Edelstahlschrauben an Oberflächen der Edelstahlbefestigungsplatten befestigt sind; und Befestigungsplatten aus rostfreiem Stahl an Oberflächen der bordeigenen magnetoelektrischen Schienen angeordnet sind, und die bordeigenen Permanentmagnetanordnungen (411) durch Edelstahlschrauben an Oberflächen der Edelstahlbefestigungsplatten befestigt sind.

3. Hybrides magnetoelektrisches Aufhängungsschienensystem nach Anspruch 2, **dadurch gekennzeichnet, dass** die Schienenpermanentmagnet-Anordnungen und die bordeigenen Permanentmagnetanordnungen (411) mindestens zwei Neodym-Eisen-Bor-Permanentmagnetschichten umfassen, eine Epoxidharz-Zwischenschicht zwischen jeweils zwei benachbarten Neodym-Eisen-Bor-Permanentmagnetschichten angeordnet ist und eine Stärke der Epoxidharz-Zwischenschicht mindestens 3/10 einer Stärke von Neodym-Eisen-Bor-Permanentmagneten ist, wobei jede Neodym-Eisen-Bor-Permanentmagnetschicht mindestens eine Reihe von Neodym-Eisen-Bor-Permanentmagneten umfasst, die in einer geraden Linie angeordnet sind, und ein Spalt zwischen jeweils zwei benachbarten Neodym-Eisen-Bor-Permanentmagneten in jeder Reihe gebildet ist.

**Revendications**

1. Système de rail de suspension hybride magnétique-électrique, comprenant :

une unité de commande (5) ;
des rails (21) et des rails magnéto-électriques embarqués (41), qui sont agencés face à face, les rails magnéto-électriques embarqués (41) comprennent au moins deux rangées de réseaux d'aimants permanents embarqués (411) ; chaque réseau d'aimants permanents embarqué (411) est pourvu d'au moins un électroaimant (412), et un pôle magnétique de l'électroaimant (412) est perpendiculaire à une direction des rails (21) ; les réseaux d'aimants permanents embarqués (411) sont en outre pourvus de capteurs de distance (413) ; l'électroaimant (412) et les capteurs de distance (413) sont connectés à l'unité de commande (5) ;
les rails (21) comprennent au moins une rangée de réseaux d'aimants permanents de rail, les réseaux d'aimants permanents de rail et les réseaux d'aimants permanents embarqués (411) sont entrelacés à intervalles, et des pôles magnétiques des réseaux d'aimants permanents de rail et des pôles magnétiques des réseaux d'aimants permanents embarqués (411) se repoussent mutuellement ;
les capteurs de distance (413) sont utilisés pour détecter un écart S entre les réseaux d'aimants permanents embarqués (411) et les réseaux d'aimants permanents de rail, et pour émettre des signaux électriques vers l'unité de commande (5) en fonction de l'écart $S$ ;
dans lequel, l'unité de commande (5) est en outre connectée à des hacheurs (51), et est utilisée pour émettre un signal de cycle de service vers les hacheurs (51) selon les signaux électriques des capteurs de distance (413) ; les hacheurs (51) sont connectés à l'unité de commande (5) et à l'électroaimant (412) ; les hacheurs (51) sont utilisés pour émettre un courant d'excitation d'une amplitude correspondante vers l'électroaimant (412) en fonction du signal de cycle de service, et le courant d'excitation excite des champs magnétiques pour maintenir une absence de contact entre les réseaux d'aimants permanents de rail et les réseaux d'aimants permanents embarqués (411) ;
le cycle de service du signal de cycle de service est $PWM = k_p(s-s_0) + k_i \int (s - s_0)dt + k_d \int (s - s_0)''dt$,
où $k_p$ représente un coefficient proportionnel, $k_i$ représente un coefficient de rétroaction intégrale d'écart, $k_d$ représente un coefficient différentiel et $S_0$ représente un écart de guidage nominal ; et
le coefficient proportionnel $k_p$, le coefficient de rétroaction intégrale d'écart $k_i$, le coefficient différentiel $k_d$ et l'écart de guidage nominal $S_0$ sont prédéfinis dans l'unité de commande (5).

2. Système de rail de suspension hybride magnéto-électrique selon la revendication 1, **caractérisé en ce que** des plaques de fixation en acier inoxydable sont agencées sur des surfaces des rails, et les réseaux d'aimants permanents de rail sont fixés à des surfaces des plaques de fixation en acier inoxydable à travers des boulons en acier inoxydable ; et

des plaques de fixation en acier inoxydable sont agencées sur des surfaces des rails magnéto-électriques embarqués, et les réseaux d'aimants permanents embarqués (411) sont fixés à des surfaces des plaques de fixation en acier inoxydable à travers des boulons en acier inoxydable.

3. Système de rail de suspension hybride magnéto-électrique selon la revendication 2, **caractérisé en ce que** les réseaux d'aimants permanents de rail et les réseaux d'aimants permanents embarqués (411) comprennent au moins deux couches d'aimants permanents en néodyme-fer-bore, une couche intermédiaire en résine époxy est agencée entre chaque deux couches d'aimants permanents en néodyme-fer-bore adjacentes, et une épaisseur de la couche intermédiaire en résine époxy est d'au moins 3/10 d'une épaisseur d'aimants permanents en néodyme-fer-bore, dans lequel,

chaque couche d'aimants permanents en néodyme-fer-bore comprend au moins une rangée d'aimants permanents en néodyme-fer-bore agencée en ligne droite, et un écart est formé entre chaque deux aimants permanents en néodyme-fer-bore adjacents dans chaque rangée.

71

73

72

Fig. 1a

71

73

72

Fig. 1b

Fig. 2

Fig. 3

Fig. 4

Fig. 5a

Fig. 5b

Fig. 6

Fig. 7

Fig. 8

Fig. 9a

Fig. 9b

First row of permanent magnet rail

First row of permanent magnet rail

Left

Right

First row of
magneto-electric
rail

On-board magneto-electric rail

First row of
magneto-electric rail

a1

b1

A

B

g1

g3

a2

b2

Permanent magnet rail

c1

d1

g2

g4

C

D

c2

d2

First row of
magneto-electric rail

First row of
magneto-electric rail

Fig. 10

On-board master control system

| Electromagnets a1 and a2 | Gap sensor g1 | |
| --- | --- | --- |

End A of bogie

Guiding chopper A

Control unit

Gap sensor g3

End B of bogie

Electromagnets b1 and b2

Guiding chopper B

Guiding chopper C

End C of bogie

Electromagnets c1 and c2

Gap sensor g2

Guiding chopper D

Gap sensor g4

End D of bogie

Electromagnets d1 and d2

Fig. 11

6

8

9

10

11

Fig. 12

Fig. 13

**REFERENCES CITED IN THE DESCRIPTION**

**Patent documents cited in the description**

- US 20060219128 A1
- US 5467718 A
- US 20070095245 A1